# EUROPEAN PATENT APPLICATION

(11) **EP 4 253 505 A1**
(43) Date of publication of application: **04.10.2023**
(21) Application number: 22382307.1
(22) Date of filing: 30.03.2022
(51) Int. Cl.: C10G 1/10

(54) **METHOD FOR TRANSFORMING SOLID PLASTIC WASTE INTO HYDROCARBONS**

(71) Applicant: Graphene Synthetic Feedstock SL, 20009 Donostia (Gipuzkoa) (ES)
(72) Inventor: Reyes Salinas, Mario Celedonio, Donostia Gipuzkoa (ES); Palma Gómez, Olatz, Donostia Gipuzkoa (ES); Kravetz Miranda, Humberto, Donostia Gipuzkoa (ES); Montealegre Aguado, Mª Angeles, Donostia Gipuzkoa (ES)
(74) Representative: Balder IP Law, S.L.

(57) **Abstract**

The present invention is related to solid waste management, specifically to a method for transforming solid plastic waste into linear ramified and/or cyclic saturated and/or unsaturated hydrocarbons, which may be used, e.g., as feedstock to manufacture polymers, as feedstock to blend in fuels and/or as drop-in quality fuels.

## Description

### FIELD OF THE INVENTION

The present invention is related to solid waste management, specifically to a method for transforming solid plastic waste into linear ramified and/or cyclic saturated and/or unsaturated hydrocarbons, which may be used, e.g., as feedstock to manufacture polymers, as feedstock to blend in fuels and/or as drop-in quality fuels.

### BACKGROUND OF THE INVENTION

One of the main problems the world is currently facing is the environmental pollution by polymeric material waste. Storage of such polymeric material waste is generally performed at landfills, and waste treatment includes simple burning or calcining. Only small amounts are recycled, after sorting the diverse types polymeric materials. Inevitably, great amounts of polymeric material waste ends up by polluting the environment, e.g., the oceans.

Along the years, many attempts to develop methods for converting polymeric material waste, by thermal or thermocatalytic destruction, e.g., pyrolysis, to try to obtain products having added value, such as fuels, heating oil, hydrocarbon gas, carbon residue or coke. The methods of the state of the art have inconveniences such as complexity, numerous reaction steps, need of previous classification of the different polymeric materials present in the waste, need of cleaning and separation of the polymeric materials to be processed, high costs, e.g., due to high energy consumption, low yield, and/or final products which require further processing to be actually used, such as purification or further reactions.

For example, EP3312223B1 discloses a method of thermal destruction of polyethylene and polypropylene waste, which comprises the thermal destruction, at temperatures of between 450°C-480°C of crushed and purified waste; such method comprising several steps, performed in a series of sequential reactors, including a catalyst column, the catalyst preferably made in the form of titanium spirals.

WO2021209276A1 discloses a pyrolysis process to obtain petrochemical products from plastic waste, which comprises the addition of nanoparticle carbon-based reagents. Although an extense list of potential carbon-based reagents is described therein, for none of them the efficacy is shown, and even the less the convenience or advantage of one or another over the remaining potential reagents.

JPH08337782 discloses a process for converting a heavy oil into a light oil in high reutilizing waste plastics without necessitating expensive hydrogen and catalyst by mixing a heavy oil with waste plastics and heat-treating the mixture at a specific temperature in a non-oxidizing atmosphere. In particular, this document discloses a heavy oil consisting of a petroleum-based heavy oil or a coal-based heavy oil is mixed with (B) waste plastics and the mixture is heat-treated at 350-460 °C (especially 380-450 °C) in (C) a non-oxidizing atmosphere such as nitrogen, argon, helium or hydrocarbon gas. The mixing ratio of the component A to the component B is preferably 0.1-1.0 wt. % of the component B based on 1 wt.% of the component A and the heat-treatment is carried out under a pressure between atmospheric pressure and 50 atm for 10-40 min.

### Carbon and its nanostructures

Carbon is capable of forming many allotropes (structurally different forms of the same element) due to its valency. Well-known forms of carbon include e.g. diamond and graphite. In recent decades, many more allotropes have been discovered and researched, including ball shapes such as fullerenes, sheets such as graphene, or cylindrical such as nanotubes. The allotropes may be crystalline or amorphous.

According to the number of dimensions found on the nanoscale (i.e. less than 100 nm), the Royal Society of Chemistry and the Royal Academy of Engineering in 2004 distinguished three types of nanostructures:
a) One-dimensional nanostructures: surfaces having a nanometric thickness, such as thin films formed by one or more atomic layers. In the case of carbon nanostructures, for example graphene sheets;
b) Two-dimensional nanostructures: the nano-structured material is nanometric in two of three spatial dimensions. In the case of carbon nanostructures, for example carbon nanotubes;
c) Three-dimensional nanostructures: the nano-structured material is nanometric in the three dimensions (x, y, z). In the case of carbon nanostructures, for example fullerenes, quantum dots.

### Graphene

Graphene is a two-dimensional sheet of carbon atoms, each carbon atom covalently bonded through sp² hybridization, called σ, to its three nearest neighbours. Such bonds give rise to a flat hexagonal network of carbon atoms (honeycomb structure). In such a network, each carbon atom provides an electron that remains without hybridizing and delocalized. Such electrons form a valence band, i.e. a band of occupied π orbitals, and a conduction band, i.e. a band of empty orbitals π*, which extend over the whole sheet.

The properties of graphene, especially the electronic properties, are largely determined by the delocalized electrons, which have great mobility in directions which are parallel to the plane. Due to the absence of chemical bonding in perpendicular direction with regard to the plane of carbon atoms, the interactions in this direction are very weak. Individual graphene sheets were isolated for the first time in 2004 by K.S. Novoselov and A.K Geim. Graphene has a high specific surface area, much larger than that reported for e.g. for carbon black and carbon nanotubes, and may be similar to that of activated carbon. Atoms at the edges of a graphene sheet have special chemical reactivity, and defects within a sheet increase its chemical reactivity (Denis, P. A. et al, 2013, "Comparative Study of Defect Reactivity in Graphene", Journal of Physical Chemistry C. 117 (37): 19048-19055).

It has been described that the reactivity of graphene may be increased by covalent modification thereof: carbons having a sp² configuration, when transformed into a sp³ configuration, which would lead to a tetrahedral geometry, form longer bonds. Such a transformation does not only affect the carbon actually transformed into a sp³ configuration, but creates also a geometric distortion which extends over multiple positions in the network. Such a functionalization has been described for example in EP3486214B1.

### SUMMARY OF THE INVENTION

A new method to obtain chemical species such as linear, ramified and/or cyclic saturated and/or unsaturated hydrocarbons (including, e.g., aromatic hydrocarbons) from mixed plastic waste, using low temperatures in a system of cascade reaction, with external contribution of carbon and without generating char-type waste.

### BRIEF DESCRIPTION OF THE FIGURES

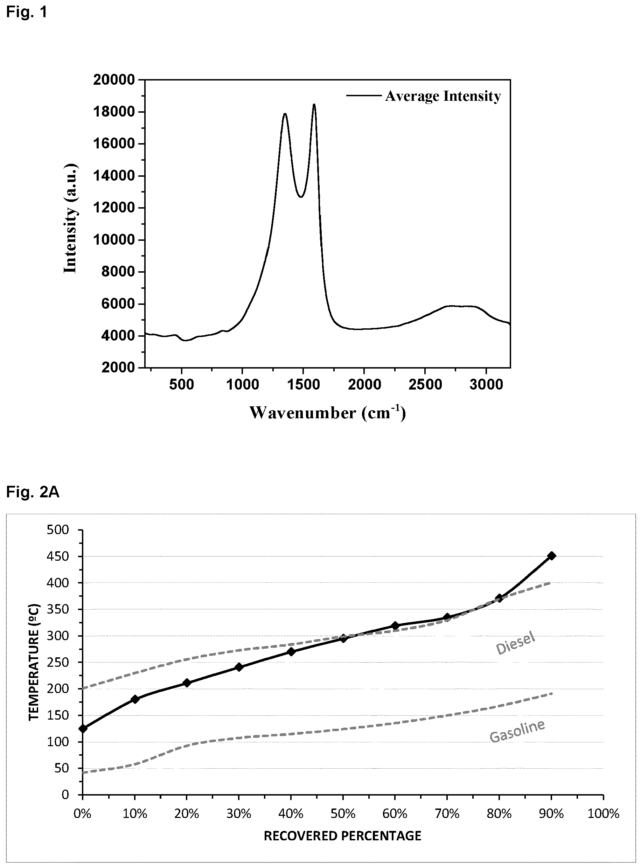

Fig. 1: average RAMAN spectroscopy for the activated graphene nanomaterial used in the method of the present invention

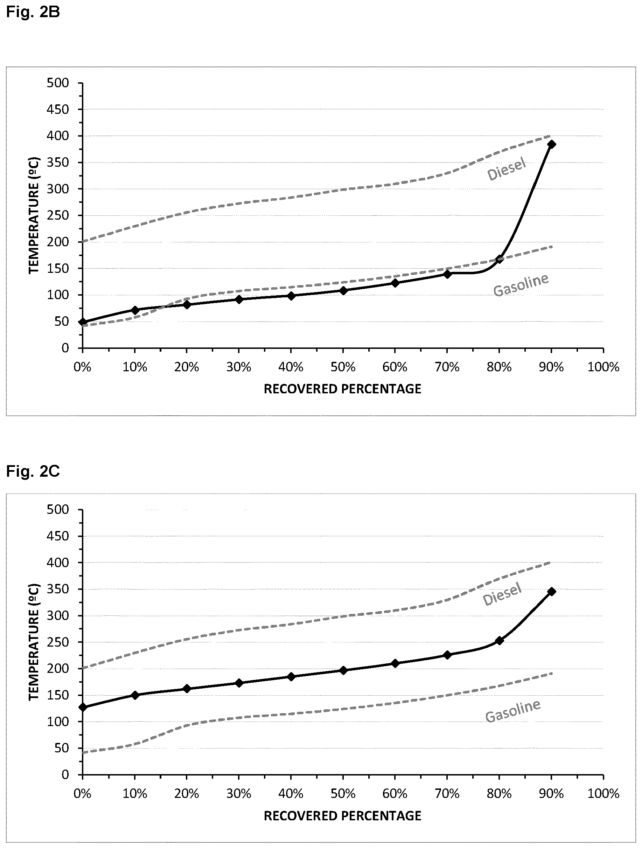

Fig. 2: distillation curves of products obtained from the LDPE solid plastic processed in Comparative Example 1 (without activated graphene nanomaterial) compared to the distillation curves of diesel and gasoline fuels: A) raw product obtained directly from the process; B) first fraction obtained from the distillation of the raw product; C) second fraction obtained from the distillation of the raw product.

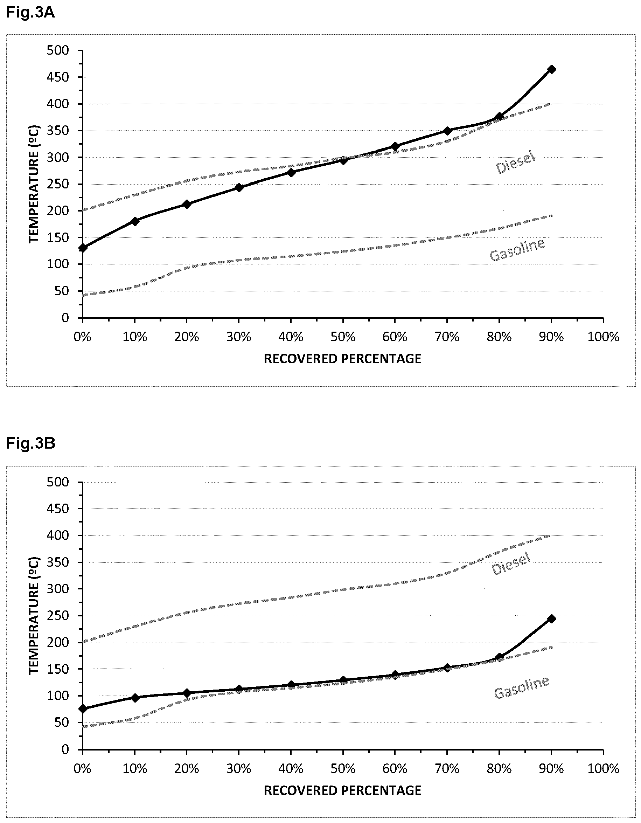

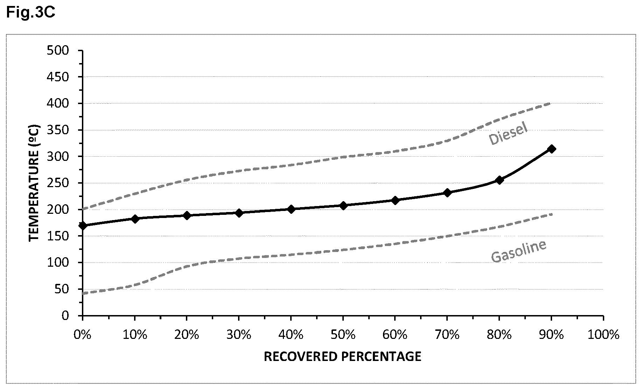

Fig. 3: distillation curves of products obtained from the LDPE solid plastic processed in Example 1 (with activated graphene nanomaterial) compared to the distillation curves of diesel and gasoline fuels: A) raw product obtained directly from the process; B) first fraction obtained from the distillation of the raw product; C) second fraction obtained from the distillation of the raw product.

### DESCRIPTION

The instant invention relates to a method for transforming solid plastic waste into linear ramified and/or cyclic saturated and/or unsaturated hydrocarbons, having from 1 to 20 carbon atoms, characterized in that the method comprises the steps of:
a) introducing solid plastic waste in a receptacle provided with an outlet, a heat source and a condenser;
b) adding the activated graphene nanomaterial in an amount of between 0.001-1 wt.% with regard to the amount of solid plastic waste, wherein the activated graphene nanomaterial:
   i) comprises at least 90% of carbon, as measured according to energy dispersive X-ray analysis;
   ii) is insoluble in water;
   ii) presents both a D band, corresponding to sp³ orbital hybridization, and a G band, corresponding to sp2 orbital hybridization, when submitted to RAMAN spectroscopy, wherein ratio of the intensity of the D band over the G band (I_{D}/I_{G} ) is below 1.
c) heating the receptacle to a temperature at a temperature below the lowest glass transition temperature of the solid plastic waste, in particular a temperature from 50 to 400 °C thereby generating gases.
d) collecting the generated gases through the outlet;
e) refrigerating the gases through a gas refrigerating unit, until condensation of at least a fraction thereof, to obtain a liquid fraction comprising linear, ramified and/or cyclic saturated and/or unsaturated hydrocarbons in liquid form and, optionally, a gaseous fraction comprising linear ramified and/or cyclic saturated and/or unsaturated hydrocarbons in gas form.

The method according to the present invention is advantageous over previous processes known in the state of the art, as in one single step, without the need of post-processing, e.g., by a purification process, to form linear, ramified and/or cyclic saturated and/or unsaturated hydrocarbons (including, e.g., aromatic hydrocarbons or hydrocarbons of up to 20 carbon atoms, e.g., the saturated hydrocarbon C24H50 tetracosane). Such species can be used to form chains of products that require C-H skeletons, in, for example, plastic-waste-to-plastic processes, to produce prime-polymer grade compounds. The obtained hydrocarbons can also be used as compounds for blends in fuels or drop-in use for energy purposes.

A process as described herein represents a novel production system with lower energy cost, without generating a carbon footprint.

A method as described herein requires a) introducing solid plastic waste in a receptacle provided with an outlet, a heat source and a condenser.

Advantageously, a method as described herein may process solid plastic waste without requiring any specific separation process or pre-treatment. For instance, mixtures of different plastic materials may be used. Nonetheless, if so desired, a process as described herein may be used to process a specific type of solid plastic waste, e.g., which has been separated in, e.g., a waste processing plant. Further, the solid plastic waste may be comminuted, e.g., in a shredder, a granulator or a pulverizer.

In several embodiments, the solid plastic waste may be in powder form and/or in the form of pieces with a length of from 5 to 100 mm.

Examples of solid plastic waste include plastic waste selected from, e.g., polyethylene, low density polyethylene, high density polyethylene, polyvinyl chloride, polypropylene, polystyrene or mixtures of two or more thereof.

In a process as described herein the solid plastic waste is introduced in a receptacle provided with an outlet, a heat source and a condenser.

Suitable receptacles are known to a skilled person.

In several embodiments the heat source may be selected from an external heat source and integrated heat source such as direct flame, heating mantles, induction, microwave or other sources.

In several embodiments the outlet may be provided with a valve, to regulate the flow of gases going through the outlet.

In several embodiments de condenser may be selected from, e.g., an Allihn condenser, a Liebig-West condenser or a spiral condenser or industrial scale equivalents thereof.

Optionally, the receptacle may be provided with a fractionating column (e.g., a Vigreux column or industrial equivalents thereof).

As a mode of example, the receptacle may be a round-bottom flask or a reactor. In a particular embodiment, the receptacle may be a reactor provided with means for temperature and pressure control.

The volume of the receptacle may vary depending on the desired scale of the process. As a mode of example, a receptacle may have the capacity to contain and process from 0.1 kg to 5000 kg of solid plastic waste, in particular from 1 kg to 2500 kg, more in particular from 10 kg to 1000 kg.

A method as described herein comprises a step b) of adding an activated graphene nanomaterial to the receptacle. The activated graphene nanomaterial may be added to the receptacle prior to, simultaneously or after introducing the solid plastic waste to the receptacle. It may be preferred to add the activated graphene nanomaterial after introducing the solid plastic to facilitate the distribution of the activated graphene nanomaterial over the plastic material.

The activated graphene nanomaterial is added in an amount of from 0.001 to 1 wt.% with regard to the amount of solid plastic waste. In particular the amount of activated graphene nanomaterial may be from 0.01 to 0.95 wt.%, more in particular from 0.1 to 0.90 wt.% and more in particular from 0.2 to 0.80 wt.%. Such amounts have been found to favour the transformation of the solid plastic waste into hydrocarbons. Higher amounts even though may not adversely affect the transformation, have not been found to further improve the same.

An activated graphene nanomaterial used in a method as described herein has the following particular features, which differentiate such nanomaterial from other carbon-based nanomaterials, e.g., graphene:
i) comprises at least 90% of carbon, as measured according to energy dispersive X-ray analysis;
ii) is insoluble in water;
ii) presents both a D band, corresponding to sp³ orbital hybridization, and a G band, corresponding to sp2 orbital hybridization, when submitted to RAMAN spectroscopy, wherein ratio of the intensity of the D band over the G band (I_{D}/I_{G}) is below 1.

Fig. 1 shows the average result of a RAMAN spectroscopy for several samples of the activated graphene nanomaterial used in the method of the present invention, wherein the presence of the D and G bands may clearly be seen. Reference is also made to Example 6.

It has been described that the reactivity of graphene may be increased by covalent modification thereof: carbons having a sp² configuration, when transformed into a sp³ configuration, which would lead to a tetrahedral geometry, form longer bonds. Such a transformation does not only affect the carbon actually transformed into a sp³ configuration, but creates also a geometric distortion which extends over multiple positions in the network. Such a functionalization has been described for example in EP3486214B1.

The activated graphene nanomaterial used in the method of the invention may be prepared by submitting graphene to extreme temperatures.

For example, a commercially available graphene (e.g., graphene nanoplatelets 1034343-98-0) or other carbon materials (e.g., carbon black) may be submitted to one or more cycles of refrigerating - heating. One cycle of refrigerating - heating would comprise refrigeration to temperatures below 0 °C, particularly from - 25 °C to 0° C, and subsequent heating to temperatures above 750 °C, particularly between 750 °C and 1100 °C. As indicated, the graphene may be submitted to one or several refrigerating - heating cycles as defined above, particularly between 1 and 50 cycles. The temperatures for refrigeration and heating may be the same or different from one cycle to another.

Without wishing to being bound to theory, such a refrigerating - heating cycles appear to achieve an activation of graphene, providing an activated graphene nanomaterial as used in a method as described herein.

As a mode of example, an activated graphene nanomaterial as used in a method as described herein may be prepared following the indications provided in publication WO2017/201632, starting from carbon black.

As noted above, and without wishing to being bound to theory, the refrigeration - heating cycles appear to cause an activation of graphene, probably by transforming the sp² configuration of some of the carbon atoms of graphene into a sp³ configuration. In any case, the activated graphene nanomaterial has been found to surprisingly and unexpectedly improve the transformation of solid plastic waste to obtain hydrocarbon mixtures of interest (e.g., through cascade reaction), in a method as described herein

A method as described herein comprises a step c) of heating the receptacle to a temperature at a temperature below the lowest glass transition temperature of the solid plastic waste, in particular a temperature from 50 to 400 °C thereby generating gases. The exact temperature may vary depending on the composition of the solid plastic waste.

Nonetheless, these gasification temperatures have been found to be generally lower than in other processes for the transformation of solid plastic waste to hydrocarbons. In several embodiments, the temperature may be from 60 to 350 °C, more in particular from 70 to 300 °C, and yet more in particular from 80 to 275 °C.

At these temperatures gasification gives rise to cascade reactions of the gasified molecules, during the residence of the gases in the receptacle, to form hydrocarbons of interest.

The pressure during heating may vary. For instance, the outlet of receptacle may be open to the atmosphere, and heating may be performed at atmospheric pressure or the outlet may be provided with a valve which may be used to regulate the pressure. As a mode of example, in several embodiments the pressure may be from 0.3 bar (i.e., 30 kPa) to 10 bar (i.e., 1000 kPa), in particular from 0.4 to 9 bar (i.e., from 40 to 900 kPa). In several embodiments the pressure may be from 0.4 to 1.1 bar (i.e., from 40 to 110 kPa). In several embodiments the pressure may be at around atmospheric pressure, e.g., from 0.8 to 1.1 ba (i.e., from 80 kPa to 110 kPa). The pressure may also vary during heating, e.g., the pressure may increase as the amount of gases generated increases.

The heating temperature may be maintained or increased to obtain a first drop of liquid fraction and until no more liquid fraction appears to be formed.

Heating may be performed in one or more steps.

For instance, in a first heating step a first drop of liquid hydrocarbon mixture may appear at from 3 minutes to 180 minutes after heating started, in particular from 5 to 160 minutes and more in particular from 10 to 140 minutes. The heating temperature may be maintained or increased until no more liquid fraction appears to be formed.

In several embodiments, heating may be stopped after such first heating step.

In several other embodiments heating may be maintained, increased, or re-started after the first heating step, in a second heating step, to reach a higher temperature or a lower the temperature from the first heating step. Such a second heating step may be performed if, e.g., after a first heating step the amount of residual solid plastic waste is still significant.

For instance, in a second heating step a first drop of liquid hydrocarbon mixture may also appear at from 3 minutes to 75 minutes after heating started, in particular from 5 to 60 minutes and more in particular from 10 to 50 minutes. The heating temperature may be maintained or increased until no more liquid fraction appears to be formed.

Additional heating steps may be performed in the same manner.

A first and second or subsequent heating steps may be performed in the same receptacle or in different receptacles. Further, the setup of the receptacle may be the same or different for the first, second and/or subsequent heating steps. For instance, in a first heating step the receptacle may be provided with a fractionating column and in the second heating step the receptacle may be provided without a fractionating column.

Heating may be performed under inert atmosphere. Accordingly, in a method as described herein in step c) an inert atmosphere may be provided. In several embodiments, such inert atmosphere may be provided by purging the receptacle with argon or nitrogen, preferably argon.

A method as described herein comprises a step d) of collecting the generated gases through the outlet. In embodiments where the outlet is provided with a valve, collecting the generated gases may comprise opening the valve.

A method as described herein comprises a step e) of refrigerating the gases through a gas refrigerating unit, until condensation of at least a fraction thereof, to obtain a liquid fraction comprising linear, ramified and/or cyclic saturated and/or unsaturated hydrocarbons in liquid form and, optionally, a gaseous fraction comprising linear ramified and/or cyclic saturated and/or unsaturated hydrocarbons in gas form.

Refrigerating may be performed by methods known to a skilled person, e.g., by allowing the gas to go through the condenser provided for the receptacle.

Hydrocarbons obtained with a process as described herein have from 1 to 20 carbon atoms, and may particularly have from 1 to 10 carbon atoms.

The nature of hydrocarbons obtained in liquid form or in gas form will typically be different. Typically, hydrocarbons obtained in gas form have lower number of carbon atoms and hydrocarbons obtained in gas form have a higher number of carbon atoms. For instance, hydrocarbons obtained in gas form may particularly have from 1 to 6 carbon atoms, in particular from 1 to 4 carbon atoms. On the other hand, hydrocarbons obtained in liquid form may particularly have from 4 to 24 carbon atoms, in particular from 5 to 22 carbon atoms and more in particular from 6 to 20 carbon atoms.

Hydrocarbons obtained with a process as described herein may be linear, ramified and/or cyclic saturated and/or unsaturated hydrocarbons. Hydrocarbons obtained may also be oxygenated or chlorinated.

In several embodiments the hydrocarbons may comprise saturated and/or unsaturated linear and/or ramified hydrocarbons. In several particular embodiments the hydrocarbons may comprise aliphatic hydrocarbons, e.g., hexane, octane, octene, nonane, nonene, decane, decene, undecane, etc.. up until tetracosane a C24H50 saturated linear compound).

In several embodiments the hydrocarbons may comprise saturated and/or unsaturated cyclic hydrocarbons, in particular embodiments the hydrocarbons may comprise unsaturated cyclic hydrocarbons, and more in particular aromatic hydrocarbons. For instance, monoaromatic hydrocarbons (e.g., benzene, toluene, ethylbenzene, ...) or polyaromatic hydrocarbons (e.g., naphthalene, etc...).

In several embodiments the hydrocarbons may comprise oxygenated hydrocarbons, e.g., oxygenated aliphatic compounds or oxygenated aromatic compounds.

Typically, hydrocarbons obtained with a process as described herein will comprise a mixture of hydrocarbons.

In a process as described herein, the formation of hydrocarbons may be accompanied by other chemical species, such as CO, CO₂, N₂, a minority of sulphur compounds, nitrogenous compounds and chlorinated compounds

A mixture of hydrocarbons in liquid form may typically comprise C5 to C24 hydrocarbons, in particular from C6 to C22, and more in particular from C7 to C20 hydrocarbons.

A mixture of hydrocarbons in liquid form may typically comprise aliphatic hydrocarbons, oxygenated aliphatic hydrocarbons (ALIPH), monoaromatic hydrocarbons (MAH), polyaromatic hydrocarbons (PAH) and oxygenated aromatic hydrocarbons (O-ALIPH) . The exact proportion of the different components will also depend on the synthetic plastic waste material being processed, especially if the starting synthetic plastic waste has aromatic monomers. For instance: an exemplary composition for a plastic waste material with a majority of LDPE, could be, e.g., of from 25 to 50 wt.% of ALIPH, from 2 to 35 wt.% of O-ALIPH, from 0.1 to 2 wt.% of MAH and from 0.05 to 1 wt.% of PAH.

An exemplary mixture of hydrocarbons in gas form may comprise from 1 to 15 mol% of methane, from 0.3 to 5 mol% of ethane, 1 to 8 mol% of ethylene, 0.5 to 8 mol% of propylene, 0.2 to 2 mol % of propane, 0.2 to 3 mol % of 1-butene, and 0.2 to 2 mol % of isobutylene, 1 to 5 mol% of C6 and higher hydrocarbons, accompanied with from 10 to 20 mol% of Carbon monoxide and from 25 to 50 mol % of carbon dioxide, 0.1 to 8 mol% of hydrogen, 0.25 to 3 mol % of oxygen, 1 to 10 mol % of nitrogen, with the remaining mol % of the mixture comprising other gases each present in an amount of equal or less than 0.3 mol% including other hydrocarbons selected from isobutane, n-butane, isopentane, acetylene, methylacetylene, propadiene, trans-2- butene, cis-2-butene, 1,3-butadiene. Sulphur may be typically present in the form of sulphur, mercaptane or hydrogen sulphur in amounts of 5 to 400 ppm (mol), and ammonia in amounts of less than 0.25 ppm (mol).

The liquid fraction and, if any, the gas fraction can be collected for subsequent use. As previously discussed, a method as described herein advantageously provides a liquid fraction comprising linear, ramified and/or cyclic saturated and/or unsaturated hydrocarbons (including, e.g., aromatic hydrocarbons or hydrocarbons of up to 24 carbon atoms, e.g., the saturated hydrocarbon C24H50 tetracosane) in one single step, without the need of post-processing, e.g., by a purification process. Nonetheless, if desired, the liquid fraction obtained may be subjected to a distillation, e.g., to separate lighter hydrocarbons (e.g., with distillation points from about 50 to about 150 °C) from heavier hydrocarbons (e.g., with distillation points from about 150 to about 350 °C).

Such species can be used to form chains of products that require C-H skeletons, in, for example, plastic-waste-to-plastic processes, to produce prime-polymer grade compounds. The obtained hydrocarbons can also be used as compounds for blends in fuels or drop-in use for energy purposes.

It has been found that liquid fractions comprising linear, ramified and/or cyclic saturated and/or unsaturated hydrocarbons obtained with a method as described herein have a distillation profile, as determined by, e.g., the standard method defined in ASTM D-86-93: Standard Test Method for Distillation of Petroleum Products, which is close to diesel and gasoline distillation curves. Reference is made to, e.g., comparative example 1, example 1 and figures 2 and 3.

On the other, part or the totality the gas fraction, if any, may be collected for use as a gas fuel, in several embodiments part or the totality the gas fraction the gas fraction may be used in a heat source for heating in step c) of a process as described herein. Additionally, or alternatively, part or the totality of the gas fraction may be re-introduced into the receptacle for reforming into higher hydrocarbons, to further increase the liquid fraction obtained with a process as described herein.

Further, as also previously discussed, if a gaseous fraction comprising linear, ramified and/or cyclic saturated and/or unsaturated hydrocarbons if any, can also be used in the heating step c) of the same method, as a fuel for the heat source, and/or may be recycled into the receptacle, e.g., to increase the production of a liquid fraction. Thereby, the carbon footprint of the process may be reduced.

With a method as described herein higher recovery yields of liquid fractions comprising hydrocarbons have been observed than with other reported methods., or similar methods without using an activated graphene nanomaterial as described herein, see, e.g., examples 1-4, even if using other carbon sources. Reference is made to, e.g., example 5.

For instance, recovery yields of liquid hydrocarbon over the total amount of synthetic plastic material may be from 10 to 75 wt.%, in particular from 15 to 70 wt.% and more in particular from 20 to 68 wt.%. Recovery yields of liquid product comprising hydrocarbons over the total amount of gasified synthetic plastic material may be from 30 to 95 wt.% in particular from 35 to 93 wt.% and more in particular from 40 to 90 wt.%.

### EXAMPLES

### Apparatus used to perform the method according to the invention

Different kinds of plastic were processed in two steps:
Step 1: A standard laboratory distillation apparatus comprising a fractionating column was used.
Step 2: A standard laboratory distillation apparatus without a fractionating column was used.

Both distillation apparatuses comprised a round-bottom flask equipped with a heating jacket, a condenser equipped with refrigeration, and an Erlenmeyer flask to collect the final product; the distillation apparatus for the first step comprised a fractionating column attached to the flask before the condenser.

### Comparative Example 1: LDPE

Step 1: 1200 g of LDPE were introduced in the flask, equipped with a fractionating column, and heating was initiated. The time to obtain the first drop of a liquid fraction comprising hydrocarbon compounds was 40 minutes. The average temperature in the flask was 200 °C.
Step 2: The plastic remaining in the flask after Step 1 was heated again. The time to obtain the first drop of a liquid fraction comprising hydrocarbon compounds was 34 minutes. The average temperature in the flask was 221 °C.

In total, i.e., both Steps 1 and 2 together, 768 g of LDPE were gasified during the method. 477 g of product were collected. Therefore, the yield of collected product over gasified plastic was 62.1 wt. %, and the yield of collected product over total plastic was 39.8 wt. %.

The raw product from combining the products of step 1 and step 2 was distilled to provide a first fraction comprising lower hydrocarbons, and a second fraction comprising higher hydrocarbons. The distillation curves from the raw product, the first fraction and the second fraction are shown in Figure 2 A, 2B and 2C respectively. As in can be seen the raw mixture has a distillation curve that sits between a gasoline distillation curve and a diesel distillation curve (Figure 2A). The first fraction has a distillation curve similar to that of gasoline (Figure 2B) and the second fraction has a distillation curve similar to that of diesel (Figure 2C).

### Example 1 (according to the invention): LDPE and activated graphene nanomaterial

Step 1: 1200 g of LDPE proceeding from industrial waste and 0.5 gr of activated graphene nanomaterial were introduced in the flask, equipped with a fractionating column, and heating was initiated. The time to obtain the first drop a liquid fraction comprising hydrocarbon compounds was 46 minutes. The average temperature in the flask was 199 °C.
Step 2: The plastic remaining in the flask after Step 1 was heated again. The time to obtain the first drop of a liquid fraction comprising hydrocarbon compounds was 20 minutes. The average temperature in the flask was 268 °C.

In total, i.e., both Steps 1 and 2 together, 854 g of LDPE were gasified during the method. 765 g of product were collected. Therefore, the yield of collected product over gasified film was 89.6 wt. %, and the yield of collected product over total plastic was 63.8 wt. %.

Therefore, the method according to the invention improved both the amount of gasified plastic, and the amount of collected product. Particularly, 86 g more plastic was gasified (an improvement of 11.2 %), and 288 g more product was collected (an improvement of 60.4 %).

The raw product from combining the products of step 1 and step 2 was distilled to provide a first fraction comprising lower hydrocarbons, and a second fraction comprising higher hydrocarbons. The distillation curves from the raw product, the first fraction and the second fraction are shown in Figure 3A, 3B and 3C respectively. As in can be seen the raw mixture has a distillation curve that sits between a gasoline distillation curve and a diesel distillation curve (Figure 3A). The first fraction has a distillation curve similar to that of gasoline (Figure 3B) and the second fraction has a distillation curve similar to that of diesel (Figure 3C).

The following table shows the composition of the raw and distilled first and second fractions of comparative example 1 and example 1 as determined by GC-MS:

| | Comparative Example 1 (without activated graphene nanomaterial) | | | Example 1 (with activated graphene nanomaterial | | |
|---|---|---|---|---|---|---|
| Comp* (%) | Raw | Distilled fraction 1 | Distilled fraction 2 | Raw | Distilled fraction 1 | Distilled fraction 2 |
| MAH | - | 0.4 | 0.2 | - | 0.5 | - |
| PAH | - | 0.1 | - | - | 0.1 | - |
| ALIPH | 39.9 | 39.0 | 44.0 | 37.3 | 38.8 | 43.2 |
| O-AR | - | - | - | - | - | - |
| O-ALIPH | 21.4 | 12.0 | 9.1 | 26.6 | 12.4 | 2.5 |
| N-comp | - | 0.7 | - | - | - | - |
| Cl-comp | - | - | - | - | - | - |
| Total | 61.3 | 52.3 | 53.4 | 63.9 | 51.9 | 45.7 |

| | | | | | | |
|---|---|---|---|---|---|---|
| * Components: in wt.% with respect to the sample analyzed: monoaromatic hydrocarbons (MAH), polyaromatic hydrocarbons (PAH), aliphatic hydrocarbons (ALIPH), oxygenated aromatic hydrocarbons (O-AR), oxygenated aliphatic hydrocarbons (O -ALIPH), nitrogenous compounds (N-comp) and chlorinated compounds (Cl-comp). | | | | | | |

An elemental analysis was carried out for the raw products of Comparative example 1 (without activated graphene nanomaterial) and example 1 (with activated graphene nanomaterial). The results are shown in the following table

| Elemental Analysis | | | | | |
|---|---|---|---|---|---|
| N° | C | H | N | S | Others* |
| Comparative Example 1 (without activated graphene nanomaterial) | | | | | |
| 1 | 84.75 | 14.45 | 0.62 | - | 0.18 |
| 2 | 84.91 | 14.48 | 0.34 | - | 0.27 |

| Example 1 (with activated graphene nanomaterial) | | | | | |
|---|---|---|---|---|---|
| 1 | 85.39 | 14.37 | 0.19 | - | 0.05 |
| 2 | 84.98 | 14.63 | 0.33 | - | 0.06 |

| | | | | | |
|---|---|---|---|---|---|
| * Others: includes oxygen, halogens and ash if any | | | | | |

The composition of the raw products of comparative Example 1 and example 1 was analyzed by GC-MS in order to identify the individual hydrocarbons. The results are shown in the following tables.

Composition of Raw product of Comparative Example 1 (without activated graphene nanomaterial)

| | Formula | Area % | [wt%] |
|---|---|---|---|
| Heptadecane | C17H36 | 3.76 | 2.24 |
| Hexadecane | C16H34 | 3.68 | 2.20 |
| Octadecane | C18H38 | 3.67 | 2.19 |
| Pentadecane | C15H32 | 3.64 | 2.17 |
| Nonadecane | C19H40 | 3.47 | 2.07 |
| Tetradecane | C14H30 | 3.37 | 2.01 |
| Eicosane | C20H42 | 3.29 | 1.96 |
| Tridecane | C13H28 | 3.21 | 1.92 |
| Dodecane | C12H26 | 2.98 | 1.78 |
| Heneicosane | C21H44 | 2.87 | 1.71 |
| Undecane | C11H24 | 2.82 | 1.68 |
| Decane | C10H22 | 2.44 | 1.46 |
| Nonane | C9H20 | 2.38 | 1.42 |
| Tetracosane | C24H50 | 2.36 | 1.41 |
| Octane | C8H18 | 2.30 | 1.37 |
| 1-Dodecanol | C12H26O | 2.12 | 3.03 |
| n-Pentadecanol | C15H32O | 2.09 | 2.99 |
| n-Pentadecanol | C15H32O | 2.08 | 2.97 |
| 1-Tetradecanol | C14H30O | 2.06 | 2.95 |
| 1-Undecanol | C11H24O | 2.03 | 2.91 |
| 1-Decene | C10H20 | 1.97 | 1.18 |
| Heptane | C7H16 | 1.97 | 1.17 |
| Tetracosane | C24H50 | 1.92 | 1.15 |
| Cyclooctane | C8H16 | 1.91 | 1.14 |
| 1-Hexadecanol | C16H34O | 1.80 | 2.57 |
| 1-Heptene | C7H14 | 1.79 | 1.07 |
| 1-Nonene | C9H18 | 1.59 | 0.95 |
| n-Heptadecanol-1 | C17H36O | 1.58 | 2.25 |
| 1-Hexene | C6H12 | 1.43 | 0.85 |
| Tetracosane | C24H50 | 1.39 | 0.83 |
| 1-Nonadecene | C19H38 | 1.34 | 0.80 |
| 2-Ethyl-oxetane | C5H10O | 1.22 | 1.75 |
| 1-Nonadecene | C19H38 | 1.04 | 0.62 |
| Tetracosane | C24H50 | 0.96 | 0.57 |
| Pentane | C5H12 | 0.85 | 0.51 |
| 1-Eicosene | C20H40 | 0.74 | 0.44 |
| Cyclopentene, 1-methyl- | C6H10 | 0.59 | 0.35 |
| Cyclohexene, 1-methyl- | C7H12 | 0.56 | 0.33 |
| Tetracosane | C24H50 | 1.56 | 0.33 |
| Total | | 82.81 | 61.32 |

Composition of Raw product of Example 1 (with activated graphene nanomaterial)

| | Formula | Area % | [wt%] |
|---|---|---|---|
| Heptadecane | C17H36 | 3.52 | 2.06 |
| Hexadecane | C16H34 | 3.48 | 2.03 |
| Pentadecane | C15H32 | 3.44 | 2.01 |
| Octadecane | C18H38 | 3.40 | 1.99 |
| Tetradecane | C14H30 | 3.18 | 1.86 |
| Nonadecane | C19H40 | 3.17 | 1.86 |
| Tridecane | C13H28 | 3.06 | 1.79 |
| Eicosane | C20H42 | 2.98 | 1.74 |
| Dodecane | C12H26 | 2.87 | 1.68 |
| Undecane | C11H24 | 2.71 | 1.59 |
| 1-Decene | C10H20 | 2.65 | 1.55 |
| n-Tridecan-1-ol | C13H28O | 2.52 | 3.53 |
| Heneicosane | C21H44 | 2.50 | 1.46 |
| 1-Tetradecanol | C14H30O | 2.48 | 3.47 |
| n-Pentadecanol | C15H32O | 2.46 | 3.45 |
| 1-Undecanol | C11H24O | 2.43 | 3.40 |
| 1-Dodecanol | C12H26O | 2.41 | 3.37 |
| Decane | C10H22 | 2.34 | 1.37 |
| Nonane | C9H20 | 2.21 | 1.29 |
| Cyclooctane | C8H16 | 2.13 | 1.25 |
| Tetracosane | C24H50 | 2.07 | 1.21 |
| 1-Nonene | C9H18 | 2.06 | 1.21 |
| Octane | C8H18 | 2.06 | 1.20 |
| 1-Hexadecanol | C16H34O | 1.97 | 2.76 |
| 1-Heptene | C7H14 | 1.96 | 1.15 |
| Heptane | C7H16 | 1.72 | 1.00 |
| n-Heptadecanol-1 | C17H36O | 1.70 | 2.39 |
| Tetracosane | C24H50 | 1.60 | 0.93 |
| 1-Hexene | C6H12 | 1.55 | 0.91 |
| 1-Octadecanol | C18H38O | 1.48 | 2.08 |
| 1-Nonadecene | C19H38 | 1.44 | 0.84 |
| Tetracosane | C24H50 | 1.15 | 0.67 |
| 1-Nonadecene | C19H38 | 1.10 | 0.65 |
| 2-Ethyl-oxetane | C5H10O | 1.01 | 1.42 |
| 1-Eicosene | C20H40 | 0.80 | 0.47 |
| Tetracosane | C24H50 | 0.78 | 0.46 |
| 2-Pentene, (Z)- | C5H10 | 0.78 | 0.45 |
| Cyclopentene, 1-methyl- | C6H10 | 0.59 | 0.34 |
| Cyclohexene, 1-methyl- | C7H12 | 0.53 | 0.31 |
| 1-Heneicosyl formate | C22H44O2 | 0.52 | 0.74 |
| Total | | 82.80 | 63.91 |

### Comparative Example 2: plastic PET powder

Step 1: 3000 g of mixed plastic proceeding from industrial waste in powder with a majority of PET were introduced in the flask, equipped with a fractionating column, and heating was initiated. The time to obtain the first drop of a liquid fraction comprising hydrocarbon compounds was 40 minutes. The average temperature in the flask was 86 °C.
Step 2: The plastic remaining in the flask after Step 1 was heated again. The time to obtain the first drop of a liquid fraction comprising hydrocarbon compounds was 23 minutes. The average temperature in the flask was 94 °C.

In total, i.e., both Steps 1 and 2 together, 1682 g of plastic were gasified during the method. 688.29 g of product were collected. Therefore, the yield of collected product over gasified plastic was 40.9 wt. %, and the yield of collected product over total plastic was 22.9 wt. %.

### Example 2 (according to the invention): PET powder and activated graphene nanomaterial

Step 1: 3000 g of mixed plastic proceeding from industrial waste in powder form with a majority of PET and 1 gr of activated graphene nanomaterial were introduced in the flask, equipped with a fractionating column, and heating was initiated. The time to obtain the first drop of a liquid fraction comprising hydrocarbon compounds was 45 minutes. The average temperature in the flask was 94 °C.
Step 2: The plastic remaining in the flask after Step 1 was heated again. The time to obtain the first drop of a liquid fraction comprising hydrocarbon compounds was 30 minutes. The average temperature in the flask was 97 °C.

In total, i.e., both Steps 1 and 2 together, 1857 g of PET powder were gasified during the method. 801.31 g of product were collected. Therefore, the yield of collected product over gasified plastic was 43.2 wt. %, and the yield of collected product over total plastic was 26.7 wt. %.

Therefore, the method according to the invention improved both the amount of gasified plastic, and the amount of collected product. Particularly, 175 g more plastic was gasified (an improvement of 10.4 %), and 113 g more product was collected (an improvement of 16.4 %).

### Comparative Example 3: Plastic film proceeding from industrial waste

Step 1: 3001 g of LDPE film proceeding from industrial waste were introduced in the flask, equipped with a fractionating column, and heating was initiated. The time to obtain the first drop of a liquid fraction comprising hydrocarbon compounds was 83 minutes. The average temperature in the flask was 138 °C.
Step 2: The plastic remaining in the flask after Step 1 was heated again. The time to obtain the first drop of a liquid fraction comprising hydrocarbon compound was 60 minutes. The average temperature in the flask was 173 °C.

In total, i.e., both Steps 1 and 2 together, 444 g of LDPE film were gasified during the method. 336 g of product were collected. Therefore, the yield of collected product over gasified film was 75.8 wt. %, and the yield of collected product over total plastic was 11.2 wt. %.

### Example 3 (according to the invention): Plastic film proceeding from industrial waste and activated graphene nanomaterial

Step 1: 3005 g of LDPE film proceeding from industrial waste and 1 gr of activated graphene nanomaterial were introduced in the flask, equipped with a fractionating column, and heating was initiated. The time to obtain the first drop of a liquid fraction comprising hydrocarbon compounds was 75 minutes. The average temperature in the flask was 155 °C.
Step 2: The plastic remaining in the flask after Step 1 was heated again. The time to obtain the first drop of a liquid fraction comprising hydrocarbon compounds was 73 minutes. The average temperature in the flask was 183 °C.

In total, i.e., both Steps 1 and 2 together, 725 g of LDPE film were gasified during the method. 627 g of product were collected. Therefore, the yield of collected product over gasified film was 86.5 wt. %, and the yield of collected product over total plastic was 20.9 wt. %.

Therefore, the method according to the invention improved both the amount of gasified plastic, and the amount of collected product. Particularly, 281 g more plastic was gasified (an improvement of 63.3 %), and 290.6 g more product was collected (an improvement of 86.4 %).

### Comparative Example 4: Mixed industrial plastic waste

Step 1: 3000 g of mixed industrial plastic waste were introduced in the flask, equipped with a fractionating column, and heating was initiated. The time to obtain the first drop of a liquid fraction comprising hydrocarbon compounds was 73 minutes. The average temperature in the flask was 107 °C.
Step 2: The plastic remaining in the flask after Step 1 was heated again. The time to obtain the first drop of a liquid fraction comprising hydrocarbon compounds was 98 minutes. The average temperature in the flask was 110 °C.

In total, i.e., both Steps 1 and 2 together, 1029 g of mixed industrial plastic waste were gasified during the method. 388.83 g of product were collected. Therefore, the yield of collected product over gasified plastic was 37.8 wt. %, and the yield of collected product over total plastic was 13.0 wt. %.

### Example 4 (according to the invention): Plastic film proceeding from industrial waste and activated graphene nanomaterial

Step 1: 3000 g of mixed industrial plastic waste and 1 gr of activated graphene nanomaterial were introduced in the flask, equipped with a fractionating column, and heating was initiated. The time to obtain the first drop of a liquid fraction comprising hydrocarbon compounds was 60 minutes. The average temperature in the flask was 119 °C.
Step 2: The plastic remaining in the flask after Step 1 was heated again. The time to obtain the first drop of a liquid fraction comprising hydrocarbon compounds was 52 minutes. The average temperature in the flask was 137 °C.

In total, i.e., both Steps 1 and 2 together, 1371 g of mixed industrial plastic waste were gasified during the method. 536.35 g of product were collected. Therefore, the yield of collected product over gasified film was 39.1 wt. %, and the yield of collected product over total plastic was 17.9 wt. %.

Therefore, the method according to the invention improved both the amount of gasified plastic, and the amount of collected product. Particularly, 342 g more plastic were gasified (an improvement of 33.2 %), and 147.5 g more product were collected (an improvement of 37.9 %). Additionally, the time to obtain the first drop was reduced in the method according to the invention.

### Comparative Example 5a: Printed plastic film proceeding from industrial waste

Step 1: 2700 g of printed plastic film proceeding from industrial waste were introduced in the flask, equipped with a fractionating column, and heating was initiated. The time to obtain the first drop of a liquid fraction comprising hydrocarbon compounds was 79 minutes. The average temperature in the flask was 155 °C.
Step 2: The plastic remaining in the flask after Step 1 was heated again. The time to obtain the first drop of a liquid fraction comprising hydrocarbon compounds was 30 minutes. The average temperature in the flask was 167 °C.

In total, i.e., both Steps 1 and 2 together, 971 g of printed plastic film were gasified during the method. 562 g of product were collected. Therefore, the yield of collected product over gasified film was 57.9% wt. %, and the yield of collected product over total plastic was 20.8 wt. %.

### Comparative Example 5b: Printed plastic film proceeding from industrial waste and Carbon Black

Step 1: 2700 g of printed plastic film proceeding from industrial waste and 1 gr of Carbon Black (obtained from Penta Carbon brand) were introduced in the flask, equipped with a fractionating column, and heating was initiated. The time to obtain the first drop of a liquid fraction comprising hydrocarbon compounds was 148 minutes. The average temperature in the flask was 91°C.
Step 2: The plastic remaining in the flask after Step 1 was heated again. The time to obtain the first drop of a liquid fraction comprising hydrocarbon compounds was 38 minutes. The average temperature in the flask was 142 °C.

In total, i.e., both Steps 1 and 2 together, 585 g of printed plastic film were gasified during the method. 351 g of product were collected. Therefore, the yield of collected product over gasified film was 60.0 wt. %, and the yield of collected product over total plastic was 13.0 wt. %.

### Comparative Example 5c: Printed plastic film proceeding from industrial waste and Carbon Nanotubes

Step 1: 2700 g of printed plastic film proceeding from industrial waste and 1 gr of Carbon Nanotubes (Multi-walled Carbon Nanotube Powder obtained from the Graphene Supermarket) were introduced in the flask, equipped with a fractionating column, and heating was initiated. The time to obtain the first drop a liquid fraction comprising hydrocarbon compounds was 125 minutes. The average temperature in the flask was 82 °C.
Step 2: The plastic remaining in the flask after Step 1 was heated again. The time to obtain the first drop of a liquid fraction comprising hydrocarbon compounds was 30 minutes. The average temperature in the flask was 165 °C.

In total, i.e., both Steps 1 and 2 together, 817 g of printed plastic film were gasified during the method. 383 g of product were collected. Therefore, the yield of collected product over gasified film was 46.8 wt. %, and the yield of collected product over total plastic was 14.2 wt. %.

### Comparative Example 5d: Printed plastic film proceeding from industrial waste and Graphene Flakes

Step 1: 2700 g of printed plastic film proceeding from industrial waste and 1 gr of Graphene Flakes ("AvPat 2" obtained from Avanzar) were introduced in the flask, equipped with a fractionating column, and heating was initiated. The time to obtain the first drop of a liquid fraction comprising hydrocarbon compounds was 95 minutes. The average temperature in the flask was 105 °C.
Step 2: The plastic remaining in the flask after Step 1 was heated again. The time to obtain the first drop of a liquid fraction comprising hydrocarbon compounds was 30 minutes. The average temperature in the flask was 135 °C.

In total, i.e., both Steps 1 and 2 together, 589 g of printed plastic film were gasified during the method. 294 g of product were collected. Therefore, the yield of collected product over gasified film was 50.0 wt. %, and the yield of collected product over total plastic was 10.9 wt. %.

### Example 5 (according to the invention): Printed plastic film proceeding from industrial waste and activated graphene nanomaterial

Step 1: 2700 g of plastic film proceeding from industrial waste and 1 gr of activated graphene nanomaterial were introduced in the flask, equipped with a fractionating column, and heating was initiated. The time to obtain the first drop of a liquid fraction comprising hydrocarbon compounds was 80 minutes. The average temperature in the flask was 164 °C.
Step 2: The plastic remaining in the flask after Step 1 was heated again. The time to obtain the first drop of a liquid fraction comprising hydrocarbon compounds was 38 minutes. The average temperature in the flask was 156 °C.

In total, i.e., both Steps 1 and 2 together, 1084 g of plastic film proceeding from industrial waste were gasified during the method. 657 g of liquid product were collected. Therefore, the yield of collected product over gasified film was 60.6 wt. %, and the yield of collected product over total plastic was 24.3 wt. %.

Therefore, the method according to the invention improved both the amount of gasified plastic, and the amount of collected product, in comparison to the same method without adding any carbon source, as well as to the same method adding diverse carbon sources, particularly carbon black, carbon nanotubes and graphene flakes. The obtained data are collected in following table:

| | **Carbon source** | **Plastic sample (g)** | **Gasified plastic (g)** | **Collected liquid product (g)** | **Yield of gasification (%)** | **Yield over gasified plastic (%)** | **Yield over total plastic (%)** |
|---|---|---|---|---|---|---|---|
| Example 5a (comparative) | / | 2700 | 971 | 562 | 36.0 | 57.9 | 20.8 |
| Example 5b (comparative) | Carbon Black | 2700 | 585 | 351 | 21.7 | 60.0 | 13.0 |
| Example 5c (comparative) | Carbon Nanotubes | 2700 | 817 | 383 | 30.3 | 46.8 | 14.2 |
| Example 5d (comparative) | Graphene Flakes | 2700 | 589 | 294 | 21.8 | 50 | 10.9 |
| Example 5 (invention) | Activated Graphene nanomaterial | 2700 | 1084 | 657 | 40.1 | 60.6 | 24.3 |

### Example 6: RAMAN spectroscopy for activated graphene nanomaterial as used in the method of the invention

Several samples of activated graphene nanomaterial were prepared by deposition of about 0.5 grams of nanomaterial on a glass sample holder, covering an approximate area of 5x5 mm². Then the samples were subjected to RAMAN Spectroscopy. The results are shown in the following table:

| **Sample N^{°}** | **I_{D}** | **I_{G}** | **I_{D}/I_{G}** |
|---|---|---|---|
| 1 | 20558.86 | 21422.61 | 0.96 |
| 2 | 16240.10 | 16940.44 | 0.96 |
| 3 | 12193.69 | 12629.46 | 0.97 |
| 4 | 18994.77 | 19640.63 | 0.97 |
| 5 | 14730.48 | 15057.30 | 0.98 |
| 6 | 15376.34 | 15703.17 | 0.98 |
| 7 | 14139.08 | 14567.06 | 0.97 |
| 8 | 24659.73 | 25686.90 | 0.96 |
| 9 | 23469.16 | 24223.97 | 0.97 |
| 10 | 19267.12 | 19858.52 | 0.97 |
| average | 18105.33 | 18685.91 | 0.97 |

Fig. 1 shows a graph representing the average result of RAMAN spectroscopy.

## Claims

1. Method for transforming solid plastic waste into linear ramified and/or cyclic saturated and/or unsaturated hydrocarbons, having from 1 to 24 carbon atoms, **characterized in that** the method comprises the steps of:
a) introducing solid plastic waste in a receptacle provided with an outlet, a heat source and a condenser;
b) adding an activated graphene nanomaterial to the receptacle in an amount of from 0.001 to 1 wt.% with regard to the amount of solid plastic waste, wherein the activated graphene nanomaterial:
i) comprises at least 90% of carbon, as measured according to energy dispersive X-ray analysis;
ii) is insoluble in water;
ii) presents both a D band, corresponding to sp³ orbital hybridization, and a G band, corresponding to sp2 orbital hybridization, when submitted to RAMAN spectroscopy, wherein ratio of the intensity of the D band over the G band (I_{D}/I_{G} ) is below 1.
c) heating the receptacle to a temperature at a temperature below the lowest glass transition temperature of the solid plastic waste, in particular a temperature from 70 to 400 °C thereby generating gases,
d) collecting the generated gases through the outlet;
e) refrigerating the gases through a gas refrigerating unit, until condensation of at least a fraction thereof, to obtain a liquid fraction comprising linear, ramified and/or cyclic saturated and/or unsaturated hydrocarbons in liquid form and, optionally, a gaeous fraction comprising linear ramified and/or cyclic saturated and/or unsaturated hydrocarbons in gas form.

2. Method according to claim 1 wherein heating is performed in one or more steps.

3. Method according to claim 1 or 2, wherein the receptacle is a round-bottom flask.

4. Method according to claim 1 or 2, wherein the receptacle is a reactor provided with means for temperature and pressure control.

5. Method according to any one of claims 1 to 4, wherein the solid plastic waste is selected from polyethylene, low density polyethylene, high density polyethylene, polyethylene terephthalate, polyvinyl chloride, polypropylene, polystyrene or mixtures of two or more thereof.

6. Method according to any one of claims 1 to 5, wherein the solid plastic waste is in powder form and/or is in the form of pieces with a length of between 5 and 100 mm.

7. Method according to any one of claims 1 to 6, wherein in step c) an inert atmosphere is provided.

8. Method according to claim 7, wherein the inert atmosphere is provided by purging the receptacle with argon or nitrogen, preferably argon.

9. Method according to any one of claims 1 to 8, wherein the heat source is selected from an external heat source and integrated heat source.

10. Method according to any one of claims 1 to 9, wherein the condenser is selected from, an Allihn condenser, a Liebig-West condenser or a spiral condenser.

11. Method according to any one of claims 1 to 10, wherein the gaseous fraction comprising linear, ramified and/or cyclic saturated and/or unsaturated hydrocarbons, if any, is in the heating step c), as a fuel for the heat source, and/or is recycled into the receptacle.
